# EUROPEAN PATENT SPECIFICATION

(11) **EP 4 045 351 B1**
(45) Date of publication and mention of the grant of the patent: **27.09.2023**
(21) Application number: 20793833.3
(22) Date of filing: 19.10.2020
(51) Int. Cl.: B60K 15/07, B60K 15/063, B60K 1/00, B60K 1/04

(54) **A SYSTEM FOR STORING PRESSURISED FUEL ON A TRUCK**
SYSTEM ZUR UNTERBRINGUNG VON UNTER DRUCK STEHENDEM TREIBSTOFF AN EINEM LASTKRAFTWAGEN
SYSTÈME DE STOCKAGE DE CARBURANT SOUS PRESSION SUR UN CAMION

(30) Priority: 18.10.2019 NL 2024051
(43) Date of publication of application: 24.08.2022
(73) Proprietor: DAF Trucks N.V., 5643 TW Eindhoven (NL)
(72) Inventor: WEIJENBORG, Bernardus Johannes Maria, 5643 TW Eindhoven (NL); VAN DER KNAAP, Albertus Clemens Maria, 5643 TW Eindhoven (NL)
(74) Representative: V.O.
(86) International application number: PCT/NL2020/050642
(87) International publication number: WO 2021/075970

(56) References cited:
- EP-A1- 3 467 290
- CN-A- 101 830 183
- US-A1- 2018 339 594
- US-B1- 9 751 399

## Description

### BACKGROUND OF THE INVENTION

The invention relates to vehicles with alternative fuel sources, in particular vehicles using pressurised fuel sources such as hydrogen gas, liquid hydrogen or other fuels in gas or liquid form.

Of particular interest are heavy load vehicles such as trucks. Trucks in general are used to transport heavy loads over long distances. Particularly in case of heavy duty long applications so-called tractor semi-trailer combinations are used in which the tractor vehicle pulls and partly supports the payload that is packed onto the semi-trailer. The connection between the tractor and the semi-trailer is established by a cardanic joint, called "fifth wheel", which provides for two rotational degrees of freedom between the two elements of this articulated vehicle combination setup. These two rotations are defined as yaw in the horizontal plane (related to cornering manoeuvres) and pitch in the vertical plane (related to driving over changing road slopes, e.g. ramp up and ramp down).

The long travelling distances of these typical long haulage tractor semi-trailer combinations require large amounts of fuel on board of the vehicle. Especially when alternative fuel sources are used such as hydrogen, the ability to carry sufficient quantities of fuel becomes even more important due to the fairly poor volumetric energy density in comparison to conventional fossil fuels (like diesel). To increase the volumetric energy density of these hydrogen based fuels normally gaseous hydrogen is pressurized and put into robust thick walled cylindrical container units that can withstand these high internal pressures. Pressure ranges typically from several bars in cryogenic conditions, to about 350-700 bar for storage at room temperature. To minimize the weight penalty of a firm and heavy high pressure resistant tank construction so called class IV carbon fibre reinforced plastic tanks are applied. These cylindrically shaped plastic tanks provide a new challenge for the commercial vehicle manufacturing industry to install these tank units on their trucks as replacement for the well-known rectangular sheet metal manufactured ambient pressure filled diesel tanks in the quest to offer sufficient driving range without the need for intermediate refuelling stops at gasoline shops (with currently lacking refuelling infrastructure).

Trucks are generally manufactured in two main variations due to difference in legal requirements in various countries. Trucks in the United States of America tend to be manufactured according to "conventional cabin" vehicle designs which have the cabin located behind the engine compartment. Conventional cabin vehicle designs have advantages in terms of aerodynamics when compared to "cabin over engine" vehicle designs as used in the European Union region. In Europe legal requirements are stricter on the overall length of tractor semi-trailer combination applications of a truck. These so-called "turning circle requirements" are different in Europe because of the more dense road network with roads that have narrower lanes and more curvature. The stricter requirement on total allowed length of the tractor semi-trailer combination favours the "cabin over engine" vehicle designs because this optimizes the vehicle setup for carrying and transporting a maximum amount of payload, specifically in terms of volume and putting load on the king pin. In Europe the total length of the tractor semi-trailer combination is currently restricted to 16,5 m and the allowed distance of the back of the semi-trailer to the king pin (which connects to the fifth wheel) is maximized at 12 m. Furthermore the front radius (which will be later on in this text elaborately described and referred to as "perimeter") of the semi-trailer has to be limited to 2040 mm to avoid that too large semi-trailer structure sways out of the pulling tractor toward the outside curve during cornering (e.g. at roundabouts). The centre of this front radius circular packaging space contour coincides with the location of the fifth wheel. This valuable available space between the fifth wheel and the back of the cabin should maximally be used to package and store payload on the semi-trailer and consequently loading the driven rear axle of the tractor. Hence limited space is available at the tractor to install the cabin compartment (in front of the semi-trailer), driveline components and fuel tanks. The more optimally the vehicle layout design utilizes the available space, the higher the payload amount maybe. In US9751399 an arrangement is disclosed wherein tanks are movable outside the perimeter or 'interference radius'. Alternatively tanks may be positioned in front of the trailer, within a tractor interference turning circle.

In DE102017011032, a solution is described where pressurized hydrogen fuel vessels are placed between the wheels of the semi-trailer of a truck in order to carry sufficient hydrogen for achieving a substantial driving range. The pressure vessels extend beyond the wheels in a direction of travel of the semi-trailer and are surrounded by a U shape frame. The U shape frame tapers toward the kingpin of the semi-trailer. The teaching has multiple disadvantages in terms of complexity, costs, system weight, vehicle roll stability, risk on leakage of hydrogen, etc..., The vessels, fuel and/or U frame may cause an increase in the total mass of the semi-trailer as the U-frame shaped carrier is not a stiff construction structure by nature. Hence the semi-trailer may deflect under the weight of the payload and additional hydrogen tanks if the frame is not strengthened. The increased mass of the semi-trailer adds static loads as well as dynamic loads to the semi-trailer. Dynamic loads may cause premature failure of the semi-trailer structure as the mass flexes the semi-trailer during transportation. To prevent these large deflections or flexing (which may cause the trailer to crack and ultimately fail due to fatigue), the semi-trailer needs to be even further strengthened which further increases the mass. Mass increases of the semi-trailer (= sum of empty weight and cargo) adds to roll instability of the semi-trailer when no appropriate roll stabilization system is applied as explained hereinafter.

A disadvantage of placing the pressure vessels under the trailer is that the location of the semi-trailer wheel axles may be limited to areas under the trailer where the pressure vessels do not extend into. When big hydrogen vessels are placed in between the wheels of the semi-trailer, this may hinder the application of robust simple cost effective rigid axles that interconnect the left and right wheels. Hence complex independent suspensions need to be applied in a strongly limited packaging space. Moreover these independent suspensions are difficult to interconnect in lateral direction via a simple roll stabiliser means in the form of a U-shaped anti-roll torsion bar. In combination with the increased semi-trailer mass and the fairly torsion weak U-frame chassis this may give rise to roll stability problems. To prevent roll-over the rear suspension of the pulling tractor may be designed with sufficient roll stiffness to withstand increased semi-trailer roll moments that are transmitted via the fifth wheel. This may have a negative effect on dynamic vehicle stability and ride comfort in the pulling tractor. A further disadvantage of placing the pressure vessels under the semi-trailer is that the space underneath the trailer is usually reserved for auxiliary maintenance and safety equipment such as spare wheels, tyre maintenance equipment, fire fighting systems and reflective equipment to name but a few. The auxiliary equipment may be essential and additional space may have to be found for placing the items which may or may not be available on the trailer.

As explained above the needed strengthening of the U-frame shaped semi-trailer and application of complex independent suspension systems increases the semi-trailer empty mass (= kerb weight) which reduces the maximum allowable cargo. This has severe implications for the profitability of truck ownership by negatively effecting the ratio between haulage costs and income from payload delivery.

Another negative aspect of a setup with installation of pressurized tanks on board of the semi-trailer is the fact that the tractor is then dependent on a special designed, limited edition semi-trailer for (long haulage) transportation of goods to reach a substantial driving range. This forms another risk for profitability of truck ownership. Furthermore the pipework connections between the hydrogen tanks on board of the semi-trailer and the rest of the driveline systems on board of the tractor (e.g. fuel cells and further tanks) need to be designed flexible and easy to operate in terms of connecting and disconnecting for the purpose of semi-trailer exchange ("drop-on, drop-off"). This poses a new design problem for the connective system in terms of ensuring safety and avoiding leakage of the highly flammable and volatile hydrogen gas.

It is an objective of the claimed invention to solve one or more problems faced in the state of the art.

### SUMMARY OF THE INVENTION

The invention provides for solving or improving at least one of the disadvantages of the prior art by providing a truck or tractor semi-trailer combination as defined in claim 1. The truck or tractor semi-trailer combination interconnected via a fifth wheel that provides at least one rotational yaw degree of freedom comprises a cabin and a pressurized fuel storage comprising at least one elongated pressure vessel for storing pressurised fuel on board of the pulling tractor with all the advantages that this entails of being semi-trailer independent to reach a substantial driving range. The pressurized fuel storage is mounted between a rear end corner of the cabin and the semi-trailer and has a largest length dimension along a length direction of the truck or tractor semi-trailer combination, i.e. between the truck cabin and the semi-trailer, that is larger than a smallest occurring distance between a semi-trailer and a rear boundary of the cabin on the tractor wherein the pressurized fuel storage is confined by the rear boundary of the cabin and a perimeter, said perimeter following a radius defined by a corner end of a semi-trailer measured from the fifth wheel, said perimeter thereby allowing the semi-trailer to turn relative to the fifth wheel in a horizontal plane and said perimeter receding with increasing height, to provide for a forward inclination of the semi-trailer relative to the fifth wheel, defined by a pitch degree of freedom, between the semi-trailer and a rear boundary of the cabin. The said position and dimension of said pressurized fuel storage allows one or more relatively large pressure vessels to be installed, possibly as an additional (pressurized) fuel vessel, in the truck that contributes for a long haul truck to cover travel ranges between 300 and 1000 km. In a preferred mode, the at least one elongated pressure vessel is mounted in upstanding position and has a diameter larger than the said smallest distance between the semi-trailer and the rear boundary of the cabin on the tractor. The invention advantageously utilizes the outer side zones and lower zones of the truck, near the rear end corner of the cabin, to store additional pressurized fuel, without limiting the yaw and pitch degree of freedom of the semi-trailer.

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention.

### BRIEF DESCRIPTION OF FIGURES

Figure 1. shows a perspective view an embodiment of the invention.
Figure 2 (A, + B) shows a top view of an embodiment of the invention.
Figure 3 shows a side view of an embodiment of the invention.
Figure 4 shows a rear perspective view of an embodiment of the invention with a storage compartment.
Figure 5 shows a rear perspective view of another embodiment of the invention with a storage compartment.
Figure 6 (A + B + C) shows an exemplary layout of a tractor semi-trailer combination, wherein a storage compartment is provided between the cabin and the semi-trailer for hydrogen storage.
Figure 7 (A + B) shows a further embodiment of pressurized fuel storage that consists of multiple elongated pressures vessels with different diameters and lengths.
Figure 8 shows a preferential layout of a tractor having a plurality of pressure vessels; an e-axle; a battery pack and fuel cells.
Figure 9 (A + B) shows rear views of two embodiments of the invention.

### DETAILED DESCRIPTION

The invention provides for a tractor 1. with a cabin 2 and at least one elongated pressure vessel 3 for storing pressurised fuel. The pressurised fuel may include any liquid or gaseous fuel but generally hydrogen gas is used. It is also not necessary that the fuel is pressurised but doing so significantly increases the amount of fuel that can be stored and consequently contributing to a substantial improvement of driving range.

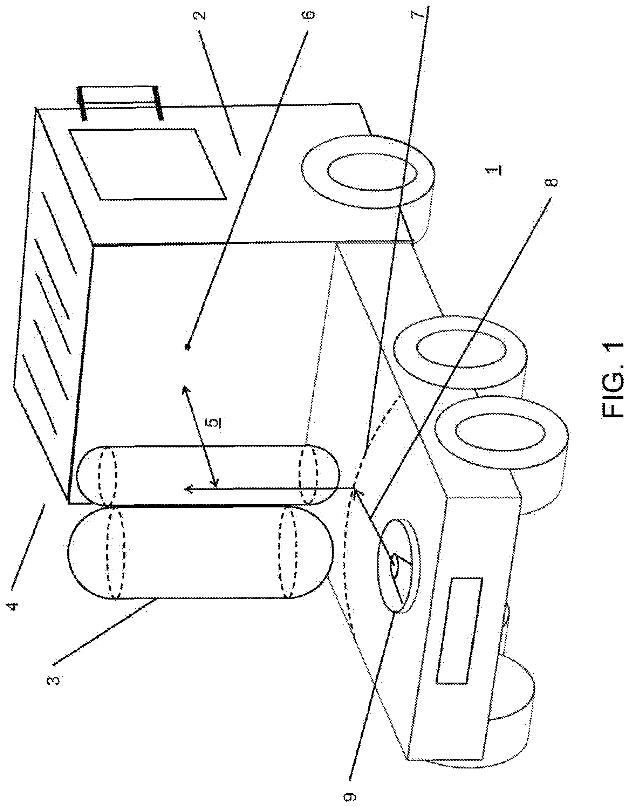

In Figure 1 an elongated spherocylindrical pressure vessel a is shown forming a pressurized fuel storage at a rear end corner 4 of the cabin 2. A storage space 5 is confined by a rear boundary 6 of the cabin 2 and a perimeter 7 that refers to the turning radius of the front end of the semi-trailer during cornering. To maximize the available space between the rear boundary of the cabin and the front end of the semi-trailer the wheelbase (distance between front and rear axle) of the tractor may be enlarged (typically up to 4 m for the use case of front wheel steered tractors and in relation to current legal turning circle requirements) and the distance between fifth wheel and rear axle may be reduced (typically down to a value between 400 and 450 mm). Note that this proposed layout configuration needs to fulfil the legally allowed boundaries set to masses and dimensions of European tractor semi-trailers combinations. Also the application of a relatively compact cabin (in length direction; specifically having the rear boundary located at a distance smaller than 880 mm behind the location of the front axle) contributes to maximization of free packaging space for installation of additional pressurized hydrogen tanks behind the cabin. Also the implementation of local cavities into the contours of the cabin rear boundary and next to the installed pressure vessel may help in optimisation of free packaging space and consequently increasing the amount of fuel that can be carried on board of the tractor.

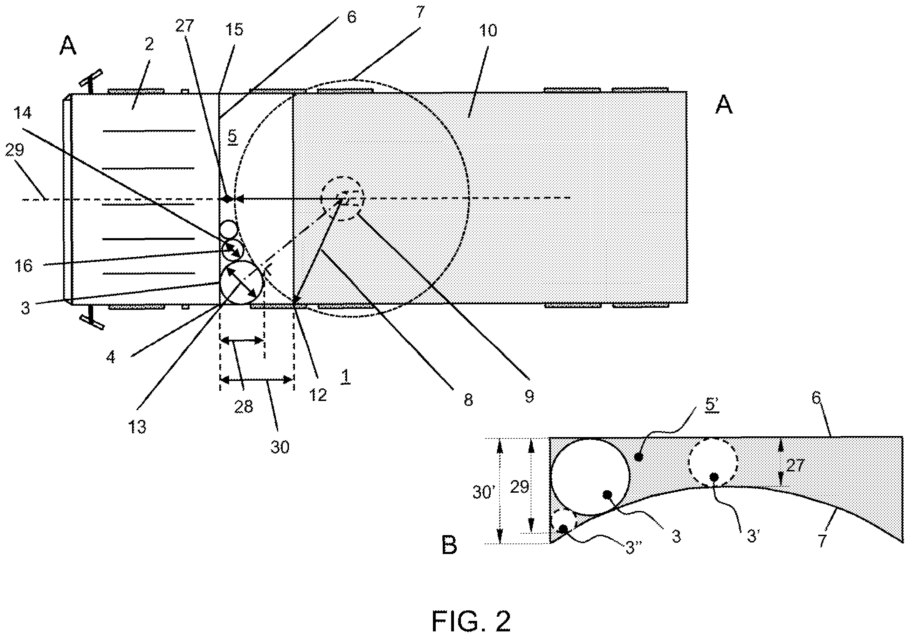

In Figure 2A the at least one spherocylindrical pressure vessel 3 is confined within the rear boundary 6 of the cabin and perimeter 7 and further has a diameter 13 equal or smaller than a maximum distance 28 which is measured in length direction of the truck and which corresponds to the diameter of a circle that is included by said perimeter 7, the rear boundary of the cabin 6 and the outer side surface of the truck. The said perimeter 7 follows a radius 8 from a fifth wheel 9, allowing the semi-trailer 10 to turn relative to the fifth wheel 9 without colliding with the cabin during cornering manoeuvres of the tractor semi-trailer combination. The pressurized fuel storage is provided by at least one elongated pressure vessel in upstanding position, and accordingly has a diameter larger than the first distance 27. With "upstanding", it is indicated that the axial direction is generally in vertical direction, with angle inclinations up to 15-20 degrees relative to the vertical.

The storage space 5 that is available for designing a pressurized fuel storage that may consist of one or more pressurized spherocylindrical vessels is also shown in Figure 2A. The corresponding confining perimeter extends beyond a radius 8 larger than a spanning distance from a fifth wheel 9 at a centre point to a corner 12 of the semi-trailer 10. Consequently the available storage space has a maximum length dimension 30 which is measured in length direction of the truck and that is defined by the distance between the rear cabin contour 6 and the perimeter 7 at the outer sides of the tractor semi-trailer combination,

In order to fill up the available storage space 5 in Figure 2A an embodiment of the invention is shown for a pressurized fuel storage that comprises one or more additional spherocylindrical pressure vessels 14 positioned at the rear boundary 6 of the cabin between the at least one spherocylindrical pressure vessel 3 and a centreline of the truck 1. The one or more additional spherocylindrical pressure vessels 14 are oriented in an upstanding direction, wherein a maximum diameter 16 of the additional pressure vessels is smaller than the one or more spherocylindrical pressure vessel 3 at the rear end corner 4 of the cabin 2. Effectively the diameters of the one or more additional pressure vessels 16 are limited by the rear boundary 6 of the cabin 2 and the said perimeter 7. Due to the perimeter 7 following the radius 8, the spherocylindrical pressure vessels 3,14 reduce in diameter 13,16 the further they are situated from the rear end corners 4,15 of the cabin 2 toward the centre line 29 of the tractor semi-trailer combination. Figure 2B shows the pressurized fuel storage 5' in more schematic detail. In the storage 5', at least one pressure vessel 3 is oriented in upstanding position. Further pressure vessels 3'and 3" (which may have different diameters) may be provided within the pressurized fuel storage 5' to fill up the available storage space. Any number of spherocylindrical pressure vessels 3,3',3",14 may be comprised in the pressurized fuel storage 5 provided they do not protrude past the perimeter 7. Instead of a single large diameter pressure vessel, several smaller pressure vessels may be combined in longitudinal and/or lateral direction into a larger pressurized fuel storage device. The resulting pressurized fuel storage 5' has a largest length dimension 28 along a length direction of the truck or tractor semi-trailer combination (in case of the embodiment of Figure 2B this length dimension is determined by the combination of pressure vessels 3 and 3") that is larger than a first distance 27 (shown in Figure 2A, B), the first distance 27 being the smallest distance that occurs, under impact of relative roll, pitch and/or yaw motions between the (secondary suspended) cabin and (primary suspended) semi-trailer, between a semi-trailer 10 (shown in Figure 2) and the rear boundary of the cabin 6. The smallest distance 27 is typically measured at centreline 29 of the truck. In case further spherocylindrical pressure vessels with even smaller diameters are applied the (theoretically) maximum achievable longitudinal length dimension 30' of the pressurized fuel storage is equal to the perimeter 7 confined maximum length dimension of the storage space 5,

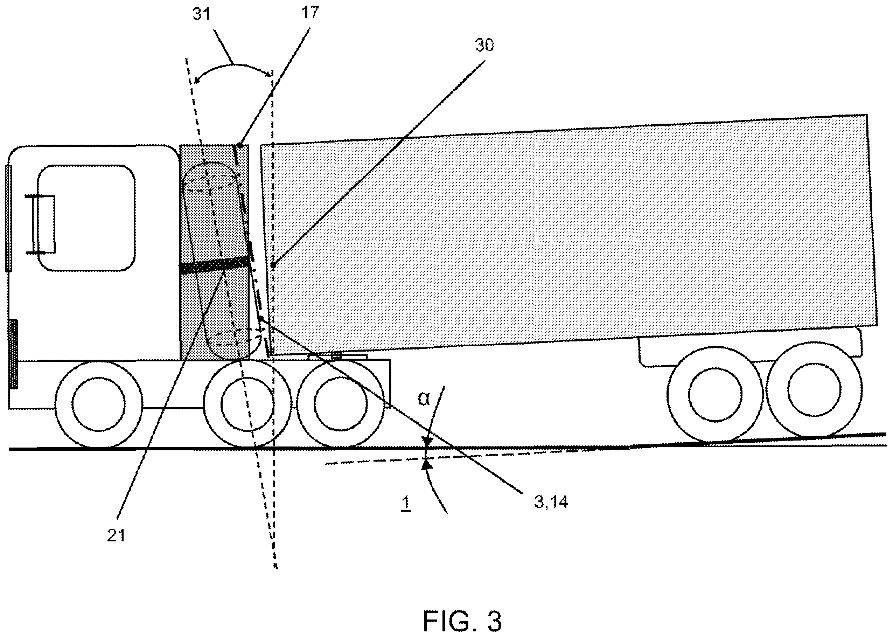

The perimeter 7 primarily allows a semi-trailer 10 to turn with large yaw angles (typically up to ±90 degrees or more) relative to the fifth wheel 9 when a tractor with a semi-trailer is steered through corners (e.g low speed manoeuvring or taking roundabouts). Furthermore, during driving over changing slopes, the semi-trailer may pitch forward relative to the tractor as indicated in Figure 3 (or vice versa the tractor pitches backwards relative to semi-trailer). This relative pitching motion (which is typically limited via end stops on the fifth wheel to ±6 degrees) further reduces the available free packaging space between the cabin and the semi-trailer. The relative pitching motion can even be further deteriorated by considering a condition of braking or accelerating on undulated road slopes. The cabin is suspended with springs and dampers to the chassis of the tractor. When the truck accelerates this may cause additional pitch angles that are superposed on the major relative semi-trailer pitch angles caused by driving over changing road slopes. The ladder frame based chassis of the tractor is usually fairly flexible in torsional direction, meaning that when driving off on a gradient may give rise to relative roll motions between cabin and semi-tractor und the impact of driving torque generated by a chassis mounted motor which twists the chassis and excites the secondary suspension of the cabin. Also centrifugal forces acting on the cabin while driving through corners may give rise to relative roll motions between the suspended cabin and semi-trailer. It has to be avoided that during traveling the semi-trailer comes into contact with the tractor other than the contact provided by the fifth wheel connection that is construed in the form of a cardanic joint allowing for pitch and yaw articulation between the tractor and the semi-trailer. Contact between the trailer and the tractor may lead to obstruction and/or damage of the truck. The radius 8 is at least equal to the spanning distance from the fifth wheel 9 to a front corner 12 of the semi-trailer 10 of the truck 1. The corresponding perimeter 7 is defined by this trailer's 10 outermost point that is rotating around the fifth wheel 9 and travelling over this perimeter contour at the interface between the semi-trailer 10 and the cabin 2 during turning. The distance from the fifth wheel 9 to the front corner 12 of the semi-trailer thus represents the boundary for the minimum clearance required. Should the semi-trailer 10 pitch forward relative to the cabin 2 during accelerating, braking and/or driving over changing road slopes then the perimeter, indicated by radius 8, moves forward for higher (in vertical direction) parts of the semi-trailer and cabin constructions and consequently a larger clearance space must be reserved to accommodate for the semi-trailer 10 that is relatively leaning forward to the tractor. It also possible that the perimeter 7 is defined with a radius 8 that is slightly larger than the distance from the fifth wheel 9 to a front corner 12 of the semi-trailer of the truck which a matter of preference or situational requirements (e.g. for providing a bit more clearance to be robust against assembly manufacturing tolerances and/or local high frequency vibrations of construction parts). The spherocylindrical pressure vessel 3, is designed with a maximum achievable diameter 13 and placed such into the available free space between the cabin and semi-trailer that it fits and is limited by the rear boundary 6 of the cabin and the (pitched) perimeter 7. This is to avoid obstruction of the trailer 10 motion during turning, braking, accelerating and/or driving over changing road slopes. The pressurized fuel storage 5' or spherocylindrical pressure vessel 3 may not protrude past the perimeter 7.

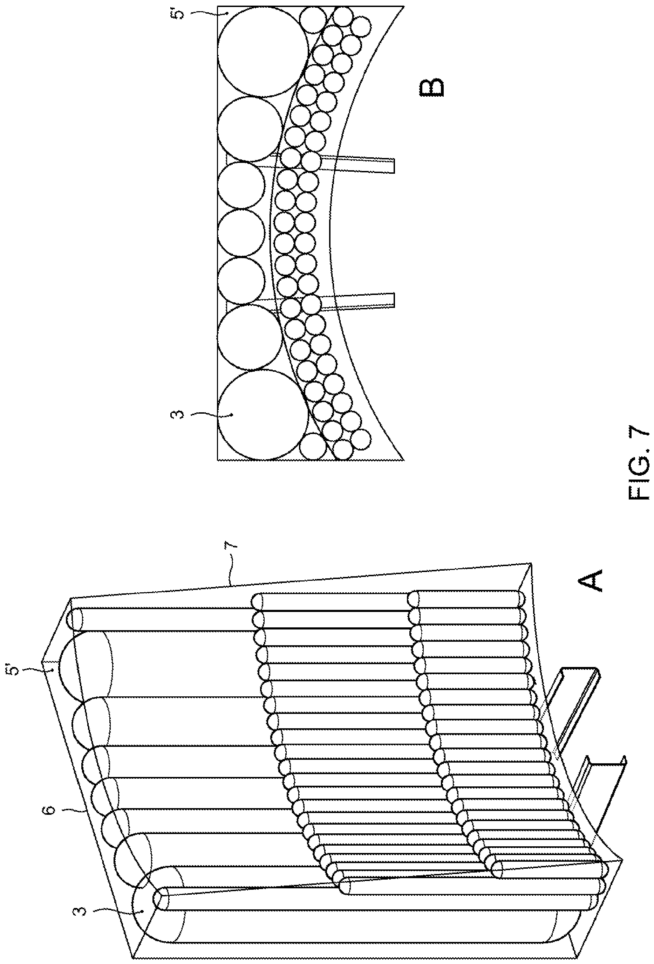

Figure 3 shows a truck 1 with the at least one spherocylindrical pressure vessel 3, and/or any of the one or more additional spherocylindrical pressure vessels 14 inclined toward a front of the truck 1 relative to an upstanding position 30 such as the front of the trailer 10 (defined in neutral position while standing on a flat road). The inclination 31 of pressure vessel 14 is at least the same or more than the forward inclination (pitch) of the semi-trailer 10 relative to the fifth wheel 9 during a condition of driving over a changing road slope as indicated by angle a in Figure 3, which reduces the available space for the vessel, and which may provide a safety clearance margin in exceptional cases where a semi-trailer may nevertheless impact the pressure vessel (e.g. by kinetic force and under deflection of end stops that limit semi-trailer pitch). By positioning the spherocylindrical pressure vessels 3,14 to lean forward it is then possible to have larger pressure vessels 3,14 (e.g. larger diameter and/or more length) than had the pressure vessels 3,14 not leaned forward. This leads to more efficient use of the defined space. The spherocylindrical pressure vessels 3,14 may also be orientated or fixed in position by straps 21 or other mechanical fixation means known for mounting pressure vessels to a vehicle chassis. Furthermore the fixation means may be construed to absorb diameter and length variations (1 to 2 cm) of the spherocylindrical tanks related to the strongly changing internal pressure fluctuations (typically ranging between 20 to 700 bar). Advantageously the fixation means fixes the cylinders to the tractor chassis at one end (either bottom or top) and provides for a "breathing" degree of freedom (particularly along an axial centre line of the cylinder) at the other end. A further possible embodiment is also shown of the invention where the truck may have a storage compartment 17 at a rear end of the cabin 2 which at least partially contains the spherocylindrical pressure vessels 3 and/or one or more additional spherocylindrical pressure vessels 14. Alternatively the storage compartment 17 is designed such that it follows the contours of the inclined perimeter as indicated by the dashed double dotted line in Figure 3. The pressurized fuel storage compartment 17 may comprise a plurality of pressurized vessels, that are of a spherical cylindrical shape as illustrated by Figure 7 which will be explained later.

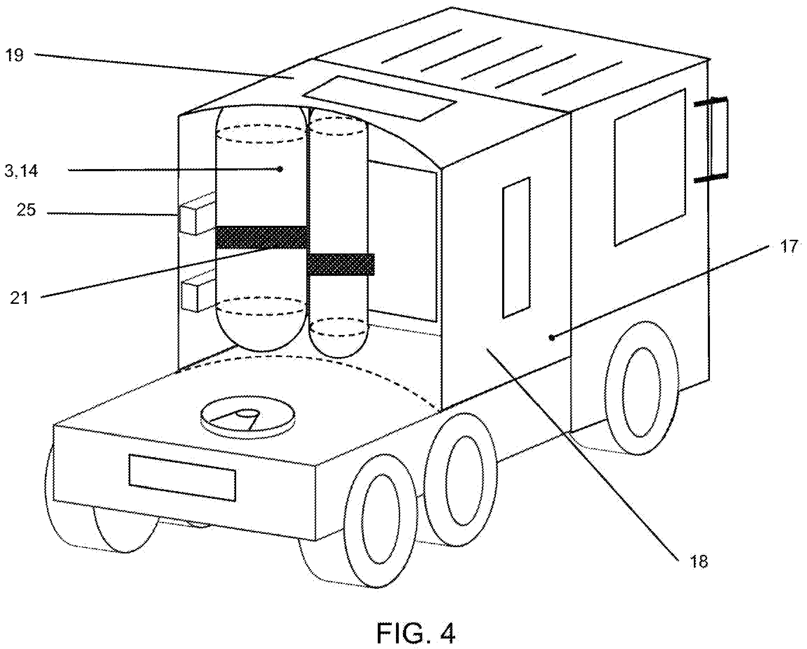

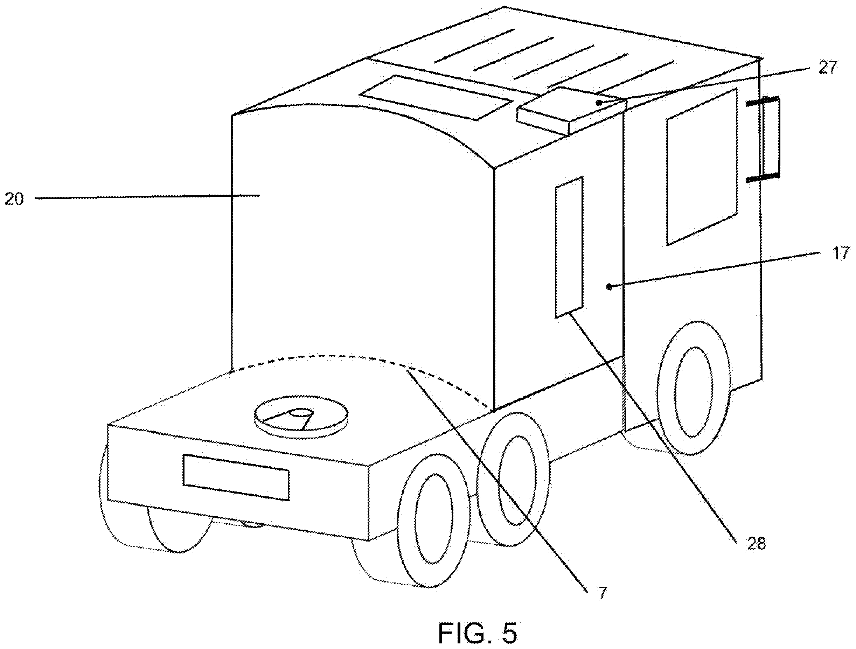

In Figures 4 and 5 an embodiment of the invention is shown with the storage compartment 17 construed by panels along the side 18 and/or top surface 19 of truck 1. The storage compartment 17 may also have a rear panel 20 along the perimeter 7, that is to say that the rear panel follows the perimeter. The storage compartment 17 may be construed by any combination of the panels, that is to say that the storage compartment 17 may be construed by only one of the mentioned panels or all of the panels or any combination in between. Forming the storage compartment 17 with panels 18,19,20 may serve more than one purpose. Panels may be used to reduce the aerodynamic drag of the storage compartment 17 by preventing travel air from being sucked into the storage compartment 17. These panels 18,19,20 may have streamlined forms which help guide the travel air past the storage compartment 17 and along the outer surface of the truck. By using panels 18,19,20 to form the storage compartment 17 the pressure vessels may also be protected from direct solar heat radiation. The storage compartment 17 may further have the benefit of assisting to secure the pressure vessels 3,14 when straps 21 or other securing means attaches to the storage compartment 17. Anchor points on the storage compartment 17 may be more accessible and shorter straps 21 or securing means may be required.

Figure 4 further shows an embodiment of the invention where the storage compartment 17 additionally has impact shielding members 25. Impact shielding members 25 shields any of the said spherocylindrical pressure vessels 3,14 from impacting forces during a collision of the truck. The shielding members 25 may be rigid to form a barrier that protects the pressure vessels from impact. Shielding members 25 may be any type of members known to be used as barriers but may also create a barrier by deflecting impacts away from the pressure vessels 3,14. The impact shielding members 25 may be part of the storage compartment 17 but may also be separate from the storage compartment 17.

Figure 5 further shows an embodiment of the invention where the storage compartment has a cooling system 27 for cooling the pressurized fluid in vessels 3,14 (shown in Figure 2) that may at least be partially contained in the storage compartment 17. The cooling system 27 may include ventilation openings 28 which may utilize natural convection to remove heat and/or travel air flow to allow cool air to enter the storage compartment 17. The cooling system 27 may also be any other known cooling system such as a forced evaporation cooling system, refrigeration system or heat pump system but is not limited to these systems. Since the temperature of a pressurized fuel may determine the internal pressure of the spherocylindrical pressure vessels 3,14 (see fig 2), a cooling system may be exceptionally beneficial to their capacity and safety. Furthermore the cooling system may be required to control the temperature of the fuel inside the tanks during rapid pressure changes, related to the thermal dynamics of gaseous fuels (e.g. typically occurring during fast filling and/or discharging).

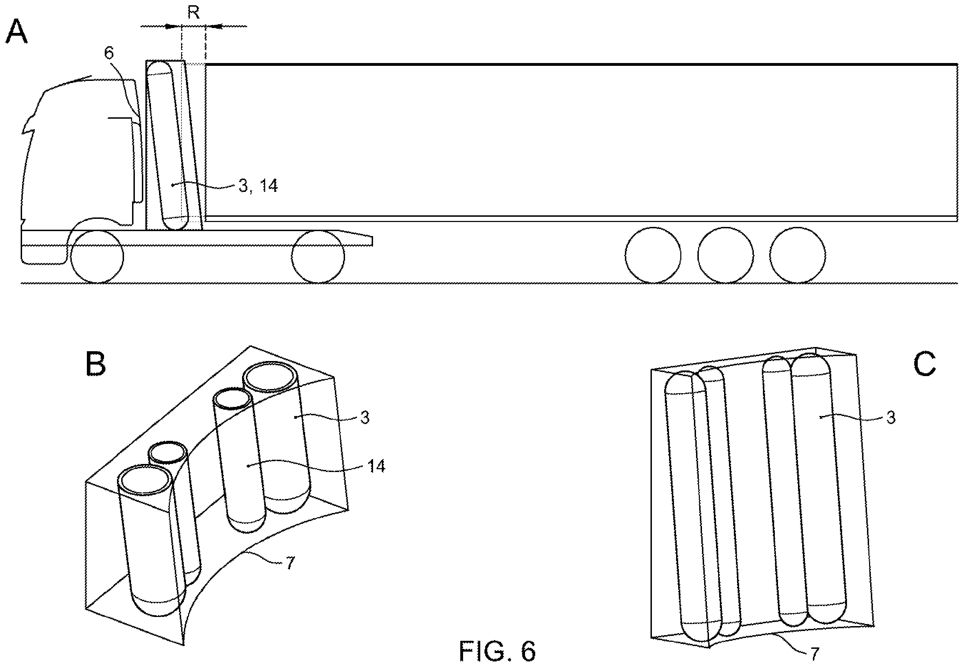

In Figure 6 an exemplary layout is shown of a tractor semi-trailer combination with a storage compartment as herein disclosed. The shown measures are indicative only and can vary depending on the embodiment. It is noted, that in a condition of driving over changing road slopes, dependent on the height of the semi-trailer, the upper part of the semi-trailer extends further forward than the downward part of the semi-trailer, due to the relative pitch forward motion around a rotation pole that is defined by the fifth wheel. Thus, the perimeter extends, relative to the fifth wheel along a tilted cylindrical shape with a radius 8 around the fifth wheel. Typical dimensions for this cylindrically shaped perimeter are a radius of 2040 mm or more and an inclination angle of 6 degrees or more. A skilled person may, through test measurements, identify a suitable extra radius and/or inclination angle of the cylinder shape so that the semi-trailer stays clear of the pressure vessel 3 if the semi-trailer is angled relative to the tractor on an angled-up road slope and simultaneously performing cornering manoeuvres. Furthermore small deformations of the perfect cylinder shape may be defined as additional clearance measures related to motions of the suspended cabin and torsional deflections of the ladder frame chassis of the tractor. For example, in the shown embodiment, the spherocylindrical pressure vessel may not protrude past a perimeter that leaves a range R of about 30-40 cm outside the radius defined by a corner of a semi-trailer relative to a fifth wheel. Figures 6B and 6C show realistic embodiments of a plurality of elongated spherocylindrical pressure vessels 3, 14 within the perimeter 7 as hereabove defined. Figure 6B concerns a cross sectional view of the elongated pressure vessels in a horizontal plane situated at approximately the half of the semi-trailer height. In Figure 6C, a plurality of pressure vessels 3' are provided, in particular, elongated pressure vessels that are inclined toward a front of the truck, and having a diameter smaller than a distance limited by the rear boundary 6 of the cabin and a perimeter 7, wherein the said perimeter follows a radius from a fifth wheel, said perimeter allowing the trailer to turn relative to the fifth wheel in a condition of driving over changing road slopes.

Figure 7A and B shows an additional embodiment, 7A in isometric view, and 7B in top view, wherein a plurality of cylindrical storage vessels is provided within the pressurized fuel storage 5'. The cylindrical vessels vary in diameter, in order to provide an efficient filling degree of the volume, with larger vessels situated along the boundary 6 of the cabin. Furthermore, the vessels vary in height, as an alternative, or additional variant to the inclined positions of the upstanding vessels in Figure 6 , in order to provide perimeter 7 to recede with increasing height, to provide for a forward inclination of the semi-trailer relative to the fifth wheel, defined by a pitch degree of freedom, between the semi-trailer and a rear boundary of the cabin, e.g. during a condition of driving over changing road slopes or substantial braking action.

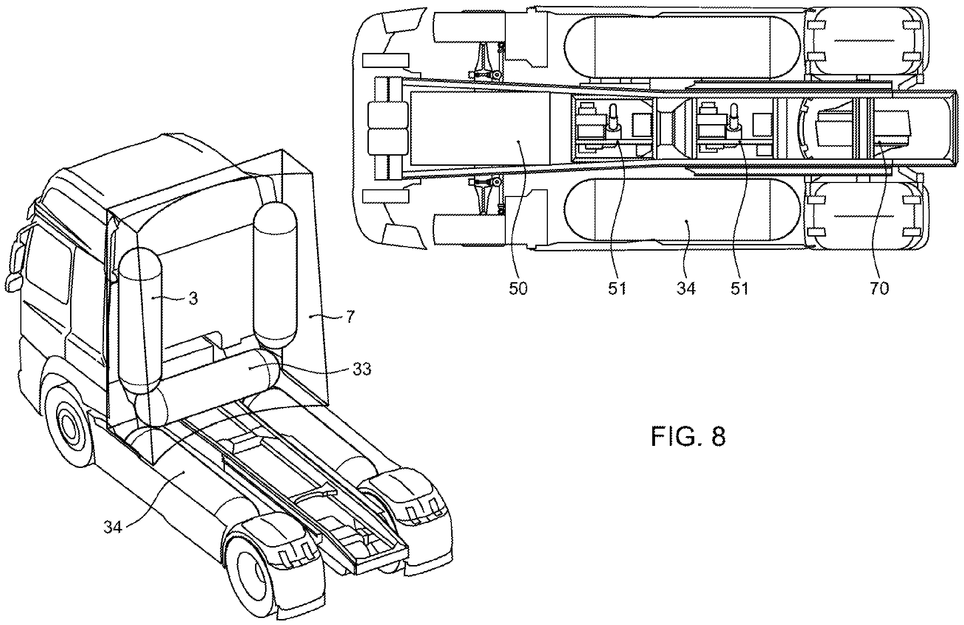

Figure 8 shows a realistic embodiment of a truck (or tractor), wherein an additional elongated pressure vessel 33 is oriented in horizontal position adjacent the at least one pressure vessel 3 in upstanding position and in near vicinity of the projected fifth wheel location; above the chassis members. This pressure vessel 33 is preferably located below on a (projected) bottom of the semi-trailer at the vertical location of the fifth wheel and above the tractor chassis members, This location is almost not affected by pitch inclination of the semi-trailer while driving over changing road slopes, so this horizontal cylindrical pressure vessel (with lateral orientation) is not hit by the trailer during simultaneous manoeuvring on these slopes as long as its diameter is chosen such that it stays within the base perimeter 7 defined at the vertical level of the fifth wheel. Furthermore, additional elongated pressure vessels 34, needed for reaching a driving range of more than 800 km or more, are provided in the bottom framework (or chassis) of the tractor, in particular, in a space provided between front and rear wheels and at the outside (in parallel to the longitudinal centreline of the tractor) where normally, in conventional combustion engine driven trucks, the diesel tanks and the exhaust aftertreatment system are installed. A battery pack 50, that realistically weighs at least about 500 - 1500 kgs, may be placed with its gravity center on or near the front axle to allow for more payload carry ability of the rear axle. Note that in addition to the afore mentioned turning circle requirements also the maximum axle loads are legally bounded (e.g. rear axle 11,5 ton and front axle 7,5 ton as an average indication for European countries). In this sense it is important to preload the front axle as much as possible with the static weight of needed tractor components leaving the rear axle maximally free to carry payload which is an important customer value (profitability of truck ownership). In electrically propelled vehicles the needed battery system is by far the heaviest component to install on the tractor hence the proposal to install the battery system as much as possible to the front of the tractor. The center space in the bottom of the trailer and in the middle between the chassis members may be used for housing fuel cells 51, where, in conventional trucks, central drive shafts or trains need to be housed. In the proposed solution according to Figure 8 the electric motors that drive the truck are being arranged as a so-called e-axle 70 (having the electric motors directly integrated in the rigid rear axle advantageously eliminating the need for a central driveshaft and differential gear system), advantageously making packaging space available to place the fuel cells in the middle of the chassis.

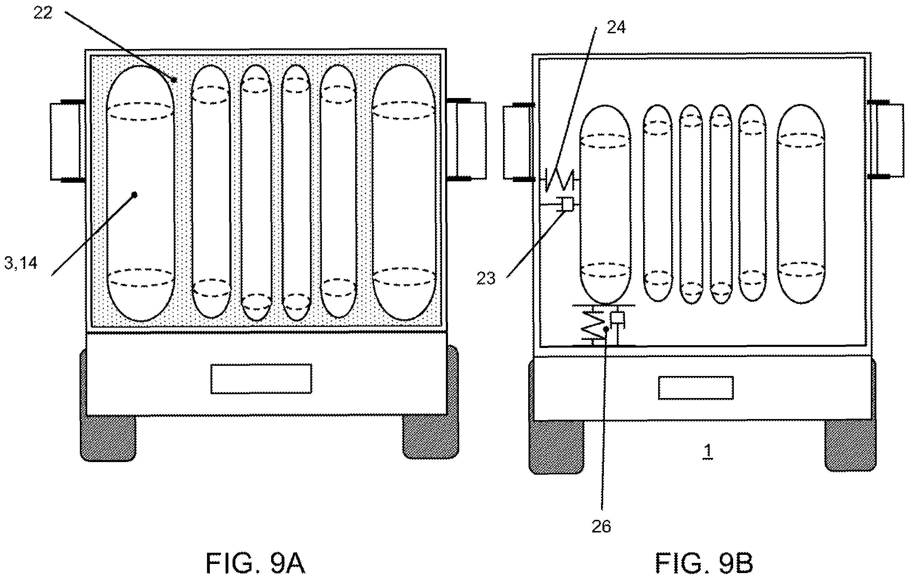

Figure 9A shows a rear view of an embodiment of the invention. In the embodiment the storage compartment 17 may have an impact energy absorption layer 22 surrounding any of the spherocylindrical pressure vessels 3,14. The energy absorption layer is intended to protect the pressure vessels 3,14 from impact energy during a collision of the truck 1 and may be a foam or honeycomb material but other materials may also be applicable. The energy absorption layer may dissipate impact energy through the movement of air or generation of friction and may spread impact energy out over a larger surface of the pressure vessels 3,14 which may further reduce stress on the pressure vessels 3,14 during a collision of the truck. This solution also advantageously absorbs any torsional flex of the truck chassis. It may be that the energy absorption layer 22 fills the storage compartment or that it only lines the interior of the storage compartment 17 and/or covers the spherocylindrical pressure vessels 3,14.

Figure 9B shows another rear view of another embodiment of the invention. In the embodiment the storage compartment 17 contains a suspension system 26; said suspension system 26 has one or more springs 24 and/or dampers 23 and/or rubber mounts for suspending and/or damping any of the spherocylindrical pressure vessels 3,14 relative to the truck 1; said suspension system 26 being able to suspend any of the said spherocylindrical pressure vessels 3,14 individually or collectively or any combination of individually and collectively relative to each other. Such a suspension system 26 may serve the purpose of cushioning the pressure vessels 3,14 from impulse disturbances during traveling. The suspension system may also reduce the rate at which impact energy is transferred to the pressure vessels 3,14. The suspension system may act along any direction such as the direction of travel of the truck 1, transverse to the direction of the trucks travel or in an upstanding direction.

It is stipulated that the general claims of this invention regarding the placement of pressurized fuel vessels is not only limited to the application of fuel cell electric vehicles. The use of hydrogen or natural gas or biogas or ammonia, etc. is also possible as fuel for application in an (adapted) internal combustion engine. These applications have a similar central drivetrain (engine-gearbox-propeller shaft) as a conventional diesel truck. Even a combination of a hydrogen fuelled internal combustion engine and an electrical drivetrain can be considered. For instance in the form of a so-called series hybrid setup wherein the internal combustion engine drives an electric generator that provides the needed electric current to charge the batteries and/or electric motor that drives the wheels. All these vehicles profit from placing almost upstanding elongated pressure vessels behind the cabin using the perimeter defined clearance zone of the semi-trailer to substantially increase the driving range in addition to the spherocylindrical pressure vessels placed left and right of the chassis members and in between the front and rear axle.

It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Modifications may be made within the scope of the invention, as determined by the claims.

## Claims

1. A truck or tractor semi-trailer combination (1) interconnected via a fifth wheel (9) that provides at least one rotational yaw degree of freedom, comprising a cabin (2) and a pressurized fuel storage compartment (5) comprising at least one elongated pressure vessel (3) for storing pressurised fuel, wherein the elongated pressure vessel (3) is mounted between a rear end corner (4) of the cabin and the semi-trailer and wherein the pressurized fuel storage compartment (5) has a largest length dimension (30) along a length direction of the truck or tractor semi-trailer combination, that is larger than a smallest distance (27), defined by the rotational yaw degree of freedom, between the semi-trailer and a rear boundary (6) of the cabin wherein the pressurized fuel storage compartment (5) is confined by the rear boundary (6) of the cabin and follows a perimeter (7), said perimeter following a radius (8) defined by a corner end (12) of a semi-trailer (10) measured from the fifth wheel (9), said perimeter (7) thereby allowing the semi-trailer (10) to turn relative to the fifth wheel (9) in a horizontal plane and said pressurized fuel storage compartment (5) receding with increasing height, to provide for a forward inclination (31) of the semi-trailer (10) relative to the fifth wheel (9), defined by a pitch degree of freedom, between the semi-trailer (10) and a rear boundary (6) of the cabin.

2. A truck or tractor semi-trailer combination (1) according to claim 1,
wherein the at least one elongated pressure vessel (3) is mounted in upstanding position and has a diameter (13) larger than said first smallest distance (27), defined by the rotational yaw degree of freedom, between the semi-trailer (10) and the rear boundary (6) of the cabin.

3. A truck or tractor semi-trailer combination (1) according to any previous claim, wherein the radius (8) is larger than a spanning distance between the fifth wheel (9) and a front corner (12) of the semi-trailer (10) of the truck.

4. A truck or tractor semi-trailer combination (1) according to any previous claim, wherein one or more additional elongated pressure vessels (14) are situated at the rear boundary (6) of the cabin between the said first pressure vessel (3) in upstanding position at the rear end corner (4) of the cabin and a centreline (29) of the truck; said one or more additional elongated pressure vessels (14) are oriented in an upstanding direction, wherein a diameter (16) of the one or more additional pressure vessels are smaller than the said first elongated pressure vessel (3) at the rear end corner (4) of the cabin.

5. A truck or tractor semi-trailer combination (1) according to any previous claim, further comprising one or more additional elongated pressure vessels (33) oriented in horizontal position in lateral direction on or above a vertical level of the fifth wheel (9).

6. A truck or tractor semi-trailer combination (1) according to any previous claim, wherein at least one elongated pressure vessel (3) is inclined toward a front of the truck (1) relative to a front of the semi-trailer (10), wherein the inclination (31) corresponds to a maximum forward inclination of the semi-trailer (10) relative to the fifth wheel (9), defined by a pitch degree of freedom, between the semi-trailer (10) and a rear boundary (6) of the cabin.

7. A truck or tractor semi-trailer combination (1) according to any previous claim, wherein the pressurized fuel storage compartment (5) comprises multiple elongated pressure vessels (3) with different diameters and lengths, arranged such to correspond to a maximum forward inclination of the semi-trailer (10) relative to the fifth wheel (9), defined by a pitch degree of freedom, between the semi-trailer (10) and a rear boundary (6) of the cabin.

8. A truck or tractor semi-trailer combination (1) according to any previous claim, wherein the truck (1) comprises a storage compartment (17) at a rear end of the cabin (2) that at least partially contains at least one elongated pressure vessel (3), wherein the storage compartment (5) is formed by panels (18, 19, 20) along any outer surface of a truck, wherein the storage compartment (17) comprises a rear end panel (20), said rear end panel following a perimeter (7), the said perimeter following the radius (8) from the fifth wheel (9) to the rear end corner (12) of the semi-trailer.

9. A truck or tractor semi-trailer combination (1) according to any previous claim, wherein the at least one elongated pressure vessel (3) is mounted by a bracket system within the storage compartment (5) arranged to absorb pressure induced tank expansions and/or tractor chassis torsion deflections.

10. A truck or tractor semi-trailer combination according to claim 9, wherein the bracket system has a rigid connection on one end of the vessel; relative to a flexible connection on the other end of the vessel.

11. A truck or tractor semi-trailer combination (1) according to any previous claim, wherein the storage compartment (5) comprises an impact energy absorption layer (22) surrounding at least one of the elongated pressure vessels (3) for absorbing impact energy during a collision of the truck.

12. A truck or tractor semi-trailer combination (1) according to any previous claim, wherein the storage unit (5, 17) comprises a suspension system (26); said suspension system comprising one or more springs (24), dampers (23) and/or rubber mounts for suspending at least one of the elongated pressure vessels (3, 14) relative to the truck; said suspension system (26) being able to suspend the at least one elongated pressure vessels (3, 14) individually or collectively or any combination of individually and collectively.

13. A truck or tractor semi-trailer combination (1) according to any previous claim, wherein the storage compartment (5, 17) comprises cooling means (27) for cooling fuel stored in the at least one elongated pressure vessel (3, 14).

14. A truck or tractor semi-trailer combination (1) according to any previous claim, wherein the storage compartment (5, 17) comprises impact shielding members (25), said impact shielding members (25) shields at least one elongated pressure vessel (3, 14) from impacting forces during a collision of the truck.

15. A truck or tractor semi-trailer combination (1) according to any previous claim, further comprising at least one fuel cell (51), an electrical driveline and an electric energy storage battery system.

## Patentansprüche

1. Eine LKW- oder Zugmaschinen-Sattelauflieger-Kombination (1), die über eine Sattelkupplung (9) miteinander verbunden ist, die mindestens einen Rotations-Gier-Freiheitsgrad bietet, mit einer Kabine (2) und einem unter Druck stehenden Kraftstofflagerfach (5), das mindestens einen länglichen Druckbehälter (3) zum Lagern von unter Druck stehendem Kraftstoff hat, wobei der längliche Druckbehälter (3) zwischen einer hinteren Ecke (4) der Kabine und dem Sattelauflieger montiert ist und wobei das Lagerfach (5) für unter Druck stehenden Kraftstoff die größte Längenabmessung (30) entlang einer Längsrichtung der Lastkraftwagen- oder Zugmaschinen-Sattelauflieger-Kombination aufweist, die größer ist als ein kleinster Abstand (27), definiert durch den Rotations-Gier-Freiheitsgrad, zwischen dem Sattelauflieger und einer hinteren Begrenzung (6) der Kabine, wobei das unter Druck stehende Kraftstofflagerfach (5) durch die hintere Begrenzung (6) der Kabine begrenzt ist und einem Umfang (7) folgt, wobei der Umfang einem Radius (8) folgt, der durch ein Eckende (12) von einem Sattelauflieger (10) definiert wird, gemessen von der Sattelkupplung (9), wobei der Umfang (7) es dem Sattelanhänger (10) ermöglicht, sich relativ zur Sattelkupplung (9) in einer horizontalen Ebene zu drehen, und das unter Druck stehende Kraftstofflagerfach (5) mit zunehmender Höhe zurückweichend, um eine durch einen Nickfreiheitsgrad definierte Vorwärtsneigung (31) des Sattelaufliegers (10) gegenüber der Sattelkupplung (9) zwischen dem Sattelauflieger (10) und einer hinteren Begrenzung (6) der Kabine zu ermöglichen.

2. Lastkraftwagen- oder Sattelzugkombination (1) nach Anspruch 1, wobei der wenigstens eine längliche Druckbehälter (3) in aufrechter Position angebracht ist und einen Durchmesser (13) aufweist, der größer ist als der erste kleinste Abstand (27), der durch den Rotations-Gier-Freiheitsgrad zwischen dem Auflieger (10) und der hinteren Begrenzung (6) der Kabine definiert ist.

3. Lastkraftwagen- oder Sattelzugkombination (1) nach einem der vorhergehenden Ansprüche, wobei der Radius (8) größer ist als eine Spannweite zwischen dem fünften Rad (9) und einer vorderen Ecke (12) des Aufliegers (10) des Lastkraftwagens.

4. Lastkraftwagen- oder Sattelzugkombination (1) nach einem der vorhergehenden Ansprüche, wobei sich ein oder mehrere zusätzliche längliche Druckbehälter (14) an der hinteren Grenze (6) der Kabine zwischen dem ersten Druckbehälter (3) in aufrechter Position an der hinteren Ecke (4) der Kabine und einer Mittellinie (29) des Lastkraftwagens befinden; der eine oder die mehreren zusätzlichen länglichen Druckbehälter (14) in einer aufstehenden Richtung ausgerichtet sind, wobei ein Durchmesser (16) des einen oder der mehreren zusätzlichen Druckbehälter kleiner ist als der erste längliche Druckbehälter (3) an der hinteren Ecke (4) der Kabine.

5. Lastkraftwagen- oder Zugsattelzugkombination (1) nach einem der vorhergehenden Ansprüche, ferner umfassend einen oder mehrere zusätzliche längliche Druckbehälter (33), die in horizontaler Position in seitlicher Richtung auf oder über einer vertikalen Ebene des fünften Rades (9) ausgerichtet sind.

6. Lastkraftwagen- oder Sattelzugkombination (1) nach einem der vorhergehenden Ansprüche, wobei wenigstens ein längliches Druckgefäß (3) in Bezug auf eine Vorderseite des Aufliegers (10) zu einer Vorderseite des Lastkraftwagens (1) geneigt ist, wobei die Neigung (31) einer maximalen Vorwärtsneigung des Aufliegers (10) in Bezug auf das fünfte Rad (9) entspricht, die durch einen Neigungsgrad definiert ist, zwischen dem Auflieger (10) und einer hinteren Begrenzung (6) der Kabine.

7. Lastkraftwagen- oder Sattelzugkombination (1) nach einem der vorhergehenden Ansprüche, wobei das unter Druck stehende Kraftstofflagerfach (5) mehrere längliche Druckbehälter (3) mit unterschiedlichen Durchmessern und Längen aufweist, die so angeordnet sind, dass sie einer maximalen Vorwärtsneigung des Sattelanhängers (10) in Bezug auf das fünfte Rad (9) entsprechen, die durch einen Neigungsgrad zwischen dem Sattelanhänger (10) und einer hinteren Begrenzung (6) der Kabine definiert ist.

8. Lastkraftwagen- oder Sattelzugkombination (1) nach einem der vorhergehenden Ansprüche, wobei der Lastkraftwagen (1) ein Lagerfach (17) an einem hinteren Ende der Kabine (2) aufweist, das wenigstens teilweise wenigstens einen länglichen Druckbehälter (3) enthält, wobei das Lagerfach (5) durch Paneele (18, 19, 20) entlang einer beliebigen Außenfläche eines Lastkraftwagens gebildet ist, wobei das Lagerfach (17) eine hintere Endplatte (20) umfasst, die einem Umfang (7) folgt, wobei der Umfang dem Radius (8) vom fünften Rad (9) bis zur hinteren Ecke (12) des Aufliegers folgt.

9. Lastkraftwagen- oder Zugsattelzugkombination (1) nach einem der vorhergehenden Ansprüche, wobei der wenigstens eine längliche Druckbehälter (3) durch ein Halterungssystem innerhalb des Lagerfachs (5) gelagert ist, das so angeordnet ist, dass es druckinduzierte Tankaufweitungen und/oder Zugwagen-Torsionsumlenkungen absorbiert.

10. Lastkraftwagen- oder Sattelzugkombination nach Anspruch 9, wobei das Halterungssystem eine starre Verbindung an einem Ende des Behälters aufweist; im Verhältnis zu einer elastischen Verbindung am anderen Ende des Behälters.

11. Lastkraftwagen- oder Zugsattelzugkombination (1) nach einem der vorhergehenden Ansprüche, wobei das Lagerfach (5) eine Schlagenergieabsorptionsschicht (22) aufweist, die wenigstens einen der länglichen Druckbehälter (3) umgibt, um Schlagenergie während einer Kollision des Lastkraftwagens zu absorbieren.

12. Lastkraftwagen- oder Zugsattelzugkombination (1) nach einem der vorhergehenden Ansprüche, wobei die Lagereinheit (5, 17) ein Federungssystem (26) umfasst; wobei das Federsystem eine oder mehrere Federn (24), Dämpfer (23) und/oder Gummilager zum Aufhängen wenigstens eines der länglichen Druckbehälter (3, 14) in Bezug auf den Lastkraftwagen umfasst; wobei das Federungssystem (26) in der Lage ist, die wenigstens einen länglichen Druckbehälter (3, 14) einzeln oder gemeinsam oder jede Kombination von einzeln und gemeinsam aufzuhängen.

13. Lastkraftwagen- oder Zugsattelzugkombination (1) nach einem der vorhergehenden Ansprüche, wobei das Lagerfach (5, 17) ein Kühlsystem (27) zum Kühlen von Kraftstoff, der in dem wenigstens einen länglichen Druckbehälter (3, 14) gelagert ist, aufweist.

14. Lastkraftwagen- oder Zugsattelzugkombination (1) nach einem der vorhergehenden Ansprüche, wobei das Lagerfach (5, 17) Schlagabschirmelemente (25) aufweist, wobei die Schlagabschirmelemente (25) wenigstens einen länglichen Druckbehälter (3, 14) vor Schlagkräften während eines Ansetzens des Lastkraftwagens abschirmen.

15. Lastkraftwagen oder Sattelzug (1) nach einem der vorhergehenden Ansprüche, ferner umfassend wenigstens eine Brennstoffzelle (51), einen elektrischen Antriebsstrang und ein elektrisches Energiespeicherbatteriesystem.

## Revendications

1. Ensemble semi-remorque de camion ou tracteur (1) interconnecté par une cinquième roue (9) qui offre au moins un degré de liberté de lacet de rotation, comprenant une cabine (2) et un compartiment de stockage de carburant sous pression (5) comprenant au moins un réservoir sous pression allongé (3) pour le stockage de carburant sous pression, dans lequel le réservoir sous pression allongé (3) est monté entre un coin arrière (4) de la cabine et la semi-remorque et dans lequel le compartiment de stockage de carburant sous pression (5) présente une longueur la plus grande (30) le long d'une direction de longueur de l'ensemble semi-remorque de camion ou tracteur, qui est supérieure à une distance la plus petite (27), définie par le degré de liberté de lacet de rotation, entre la semi-remorque et une limite arrière (6) de la cabine, dans lequel le compartiment de stockage de carburant sous pression (5) est confiné par la limite arrière (6) de la cabine et suit un périmètre (7), ledit périmètre suivant un rayon (8) défini par une extrémité d'angle (12) d'une semi-remorque (10) mesurée à partir de la cinquième roue (9), ledit périmètre (7) permettant ainsi à la semi-remorque (10) de tourner par rapport à la cinquième roue (9) dans un plan horizontal et ledit compartiment de stockage de carburant sous pression (5) s'éloignant au fur et à mesure que la hauteur augmente, afin d'assurer une inclinaison vers l'avant (31) de la semi-remorque (10) par rapport à la cinquième roue (9), définie par un degré de liberté de tangage, entre la semi-remorque (10) et une limite arrière (6) de la cabine.

2. Ensemble semi-remorque de camion ou tracteur (1) selon la revendication 1, dans lequel l'au moins un réservoir sous pression allongé (3) est monté en position debout et présente un diamètre (13) supérieur à la première plus petite distance (27), définie par le degré de liberté de lacet de rotation, entre la semi-remorque (10) et la limite arrière (6) de la cabine.

3. Ensemble semi-remorque de camion ou tracteur (1) selon l'une quelconque des revendications précédentes, dans lequel le rayon (8) est supérieur à la distance entre la cinquième roue (9) et un coin avant (12) de la semi-remorque (10) du camion.

4. Ensemble semi-remorque de camion ou tracteur (1) selon l'une quelconque des revendications précédentes, dans lequel un ou plusieurs réservoirs sous pression allongés supplémentaires (14) sont situés à la limite arrière (6) de la cabine entre ledit premier réservoir sous pression (3) en position debout à l'angle arrière (4) de la cabine et un axe central (29) du camion ; ledit ou plusieurs réservoirs sous pression allongés supplémentaires (14) sont orientés vers le haut, dans lequel le diamètre (16) du ou des réservoirs sous pression supplémentaires est inférieur à celui dudit premier réservoir sous pression allongé (3) dans l'angle arrière (4) de la cabine.

5. Ensemble semi-remorque de camion ou tracteur (1) selon l'une quelconque des revendications précédentes, comprenant en outre un ou plusieurs réservoirs sous pression allongés supplémentaires (33) orientés en position horizontale dans la direction latérale sur ou au-dessus d'un niveau vertical de la cinquième roue (9).

6. Ensemble semi-remorque de camion ou tracteur (1) selon l'une quelconque des revendications précédentes, dans lequel au moins un réservoir sous pression allongé (3) est incliné vers l'avant du camion (1) par rapport à l'avant de la semi-remorque (10), l'inclinaison (31) correspondant à une inclinaison maximale vers l'avant de la semi-remorque (10) par rapport à la cinquième roue (9), définie par un degré de liberté de tangage, entre la semi-remorque (10) et une limite arrière (6) de la cabine.

7. Ensemble semi-remorque de camion ou tracteur (1) selon l'une quelconque des revendications précédentes, dans lequel le compartiment de stockage de carburant sous pression (5) comprend plusieurs réservoirs sous pression allongés (3) de diamètres et de longueurs différents, disposés de manière à correspondre à une inclinaison maximale vers l'avant de la semi-remorque (10) par rapport à la cinquième roue (9), définie par un degré de liberté de tangage, entre la semi-remorque (10) et une limite arrière (6) de la cabine.

8. Ensemble semi-remorque de camion ou tracteur (1) selon l'une quelconque des revendications précédentes, dans lequel le camion (1) comprend un compartiment de stockage (17) à une extrémité arrière de la cabine (2) qui contient au moins partiellement au moins un récipient sous pression allongé (3), dans lequel le compartiment de stockage (5) est formé par des panneaux (18, 19, 20) le long de toute surface extérieure d'un camion, dans lequel le compartiment de stockage (17) comprend un panneau d'extrémité arrière (20), ledit panneau d'extrémité arrière suivant un périmètre (7), ledit périmètre suivant le rayon (8) entre la cinquième roue (9) et le coin d'extrémité arrière (12) de la semi-remorque.

9. Ensemble semi-remorque de camion ou tracteur (1) selon l'une quelconque des revendications précédentes, dans lequel l'au moins un réservoir sous pression allongé (3) est monté par un système de support dans le compartiment de stockage (5) conçu pour absorber les dilatations du réservoir induites par la pression et/ou les déflexions de torsion du châssis du tracteur.

10. Ensemble semi-remorque de camion ou tracteur selon la revendication 9, dans lequel le système de support présente une connexion rigide à une extrémité de la cuve, par rapport à une connexion flexible à l'autre extrémité de la cuve.

11. Ensemble semi-remorque de camion ou tracteur (1) selon l'une quelconque des revendications précédentes, dans lequel le compartiment de stockage (5) comprend une couche d'absorption de l'énergie d'impact (22) entourant au moins l'un des réservoirs sous pression allongés (3) pour absorber l'énergie d'impact lors d'une collision avec le camion.

12. Ensemble semi-remorque de camion ou tracteur (1) selon l'une quelconque des revendications précédentes, dans lequel l'unité de stockage (5, 17) comprend un système de suspension (26) ; ledit système de suspension comprend un ou plusieurs ressorts (24), amortisseurs (23) et/ou supports en caoutchouc pour suspendre au moins un des récipients sous pression allongés (3, 14) par rapport au camion ; ledit système de suspension (26) étant en mesure de suspendre au moins un des récipients sous pression allongés (3, 14) individuellement ou collectivement ou toute combinaison d'éléments individuels et collectifs.

13. Ensemble semi-remorque de camion ou tracteur (1) selon l'une quelconque des revendications précédentes, dans lequel le compartiment de stockage (5, 17) comprend des moyens de refroidissement (27) pour refroidir le carburant stocké dans au moins un réservoir sous pression allongé (3, 14).

14. Ensemble semi-remorque de camion ou tracteur (1) selon l'une quelconque des revendications précédentes, dans lequel le compartiment de stockage (5, 17) comprend des éléments de protection contre les chocs (25), lesdits éléments de protection contre les chocs (25) protégeant au moins un récipient sous pression allongé (3, 14) des forces d'impact lors d'une collision avec le camion.

15. Ensemble semi-remorque de camion ou tracteur (1) selon l'une quelconque des revendications précédentes, comprenant en outre au moins une pile à combustible (51), une chaîne cinématique électrique et un système de batterie de stockage d'énergie électrique.
